(19) Europäisches Patentamt

European Patent Office

Office européen des brevets

(11) Publication number: **0 247 977 B1**

# EUROPEAN PATENT SPECIFICATION

(45) Date of publication of patent specification: **27.12.91**　(51) Int. Cl.⁵: **B61H 15/00**, B60T 17/08, F16D 65/56

(21) Application number: **87830175.3**

(22) Date of filing: **11.05.87**

(54) Brake actuator for railway vehicles and the like.

(30) Priority: **29.05.86 IT 6744486**

(43) Date of publication of application:
**02.12.87 Bulletin 87/49**

(45) Publication of the grant of the patent:
**27.12.91 Bulletin 91/52**

(84) Designated Contracting States:
**AT BE CH DE ES FR GB GR IT LI LU NL SE**

(56) References cited:
**EP-A- 0 050 573**
**EP-A- 0 084 295**
**FR-A- 2 473 143**

(73) Proprietor: **WABCO WESTINGHOUSE COMPAGNIA FRENI S.p.A.**
**Via Volvera 51**
**I-10045 PIOSSASCO (Torino)(IT)**

(72) Inventor: **Correndo, Roberto**
**Via Europa 15**
**I-10022 Carmagnola Torino(IT)**

(74) Representative: **Buzzi, Franco et al**
**c/o Jacobacci-Casetta & Perani S.p.A. Via Alfieri, 17**
**I-10121 Torino(IT)**

## Description

The present invention relates in general to brake actuators general for railway vehicles and the like.

More particularly, the invention relates to an actuator of the type comprising a housing defining a cylinder in which a first piston is slidable under the action of pressurised fluid and against the action of resilient return means, the first piston having an associated rod member movable axially through one end of the housing to operate braking means so as to achieve service braking, the rod member incorporating a screw-and-nut device for the automatic recovery of play due to wear of the braking means, and the actuator also being provided with spring-operated means housed within the housing and comprising a second piston operatively associated with the rod member to effect its advance so as to achieve emergency or parking braking automatically under the action of a thrust spring opposed by a releasable fluid pressure opposing the thrust of the first piston, and manually-operable release means for achieving the withdrawal of the rod member in the activated condition of the spring-operated means.

A brake actuator of the type specified above is described and illustrated in European patent application No. EP-A-0 084 295 in the name of the Applicants. According to this application, the components of the spring-operated means for achieving the emergency or parking braking are disposed behind the screw-and-nut device for the automatic recovery of the play and the other components arranged for the service braking, within an axial extension of the housing.

This configuration has the disadvantage of giving the actuator considerable axial bulk which limits its flexibility of use.

The object of the present invention is to avoid these disadvantages and to provide a brake actuator for railway vehicles of the type specified above which has a considerably smaller axial bulk than the known actuators of the same type.

In order to achieve this object, the invention provides a brake actuator for railway vehicles and the like of the type specified at the beginning, characterised in that the rod member includes an axial tubular element fixed to the first piston and containing the screw-and-nut device for the automatic recovery of play, and the spring-operated means include a screw-and-nut unit which is substantially concentric with the screw-and-nut device for the automatic recovery of play and in which the screw is formed by external threading on the axial tubular element and the nut is associated with the second piston so as to be free to rotate during the operation of the first piston in the presence of fluid pressure acting on the second piston and to be locked against rotation upon the release of the fluid pressure under the action of the said thrust spring to achieve the emergency or parking braking following service braking effected by the first piston.

By virtue of this characteristic, the actuator according to the invention is considerably more compact and has less axial bulk than conventional actuators of the same type, with a simpler and cheaper function and a safe and reliable operation.

According to one particularly advantageous embodiment of the invention, the second piston has a hollow axial portion housing the nut and of screw-and-nut unit of the spring-operated means and, around the nut, the thrust spring; the hollow axial portion and nut carrying respective complementary coupling means kept in a disengaged condition in the presence of fluid pressure acting on the second piston and arranged to engage each other as a result of the release of the fluid pressure under the action of the thrust spring.

To advantage, the manual release means for achieving the withdrawal of the rod member in the condition of activation of the spring-operated means include a gear fixed for rotation to the front end of a tubular shaft projecting from the housing and containing the screw and carrying the nut of the screw-and-nut device for the automatic recovery of play, and a movable stop pin which releasably engages the teeth of the gear and, in use, is locked for rotation relative to the housing of the actuator.

The invention will now be described in detail with reference to the appended drawings, provided purely by way of non-limiting example, which illustrates schematically a brake actuator for railway vehicles according to the invention, in axial section.

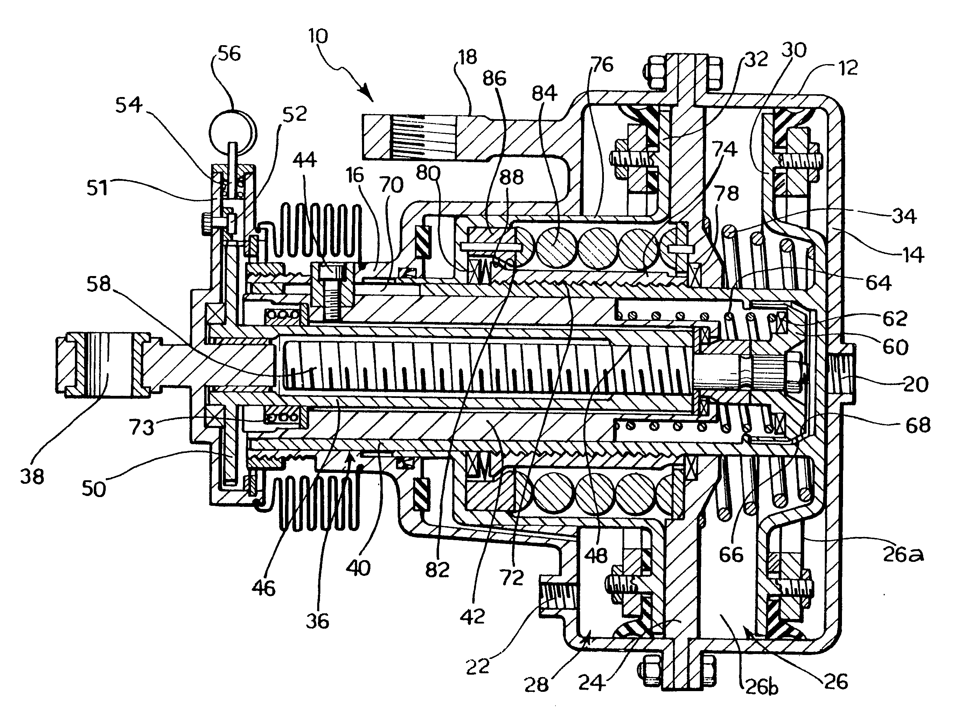

With reference to the drawing, a pneumatic brake actuator for railway vehicles is generally indicated 10. The actuator 10 includes a cylindrical housing 12 having a base 14 at one end and a hollow appendage 16 at its opposite end, surmounted by attachment arms 18 (only one of which is indicated in the drawing) for the fixing of the actuator 10 to the structure of a railway vehicle. The base 14 and the part for connecting the hollow appendage 16 to the housing 12 have respective tubular connectors 20, 22 for connection to a pressurised air supply, for the purpose which will be explained below during the description.

The chamber within the housing 12 is divided by an annular intermediate partition 24 into a service braking cylinder 26 and an emergency or parking braking cylinder 28, a first piston 30 for the service braking and a second piston 32 for the emergency or parking braking being sealingly slidable in the respective cylinders.

The piston 30 divides the cylinder 26 into two chambers 26a, 26b of which the first communicates with the tubular connector 20 and the second contains a helical opposing spring 34 which acts between the intermediate partition 24 and the piston 30 to bias the latter against the base 14.

The piston 30 has an associated rod member, generally indicated 36, which is slidably guided through the hollow appendage 16 of the housing 12 and carries at its outer end an attachment member 38 for operating a brake shoe or block associated with a railway vehicle wheel, in known manner. In use, the attachment member 38 is locked for rotation relative to the housing 12 in known manner.

The rod member 36 comprises an outer tubular element 40 fixed to the piston 30 and surrounding a bush 42 fixed to the hollow appendage 16 of the housing 12 by means of a radial pin 44. A tubular shaft 46 is axially slidable and rotatable within the bush 42 and carries at its inner end a nut 48 and at its outer end projecting from the appendage 16 forms a gear 50 whose teeth are engaged by a stop pin 52. This stop pin 52 is supported by an annular cover 51 fixed to the attachment member 38 and is normally held in engagement with the teeth of the gear 50 by a spring 54. The stop pin 52 is provided with an external operating member 56 by means of which the pin 52 can be disengaged manually from the gear 50 so as to free the tubular shaft 46, and hence the nut 48, for rotation relative to the attachment member 38 in the manner explained below.

The nut 48 is screwed onto a screw 58 the inner end of which is connected to a head 60 against which bears, with the interposition of a bearing 62, one end of a spring 64 whose opposite end reacts axially against the sleeve 42. The head 60 carries a conical coupling surface 66, possibly toothed, for cooperating in the manner explained below with a complementary conical coupling surface 68, possibly toothed, formed on the piston 30.

The outer tubular element 40 of the rod member 36 has an axial slot 70 close to its outer end, through which the locking pin 44 for the sleeve 42 extends, and carries external threading 72 in substantial axial correspondence with the nut 48.

An annular friction member of known type, indicated 73, is interposed between the bush 42 and the tubular shaft 46 carrying the nut 48. This annular friction member 73 together with the nut 48 and the screw 58, constitutes a device for the automatic recovery of play due to wear of the brake shoes, the operation of which will be explained below.

A nut 74 is screwed onto the threading 72 of the outer tubular element 40 and is housed within an axial hollow portion 76 in the piston 32. In effect, the nut 72 is interposed between two rolling bearings 78, 80 disposed in correspondence with the intermediate annular partition 24 and the outer end of the axial hollow portion 76 respectively, and has a conical coupling surface 82 on the side of this outer end. The nut 74 is surrounded by a thrust spring 84 reacting at one end against the intermediate partition 24 and at its opposite end against an abutment 86 carried by the outer end of the hollow portion 76 and having a conical coupling surface 88 for cooperating with the coupling surface 82 of the nut 74, in the manner explained below.

The operation of the actuator described above is as follows.

During normal operation, the connector 22 is connected permanently to a pressurised air supply installed in the railway vehicle so that the piston 32 is maintained in the position illustrated in the drawing, against the intermediate partition 24, compressing the thrust spring 84. In this situation, the coupling surfaces 82 and 88 are disengaged and the nut 74 is free to rotate relative to the piston 32 and the outer tubular element 40 of the rod member 36.

In order to effect service braking, that is, to bring the brake shoe or block connected to the attachment member 38 of the tubular rod 36 against the wheel of the vehicle, air is introduced under pressure into the chamber 26a through the tubular connector 20. In this manner, the piston 30 is forced to advance between the coupling surfaces 66 and 68 to cause the advance of the screw 58, and consequently of the rod member 36 and hence of the attachment member 38, against the action of the spring 34. Thus, the braking action is achieved while the nut 74 is kept in a fixed axial position, rotating freely on the threading 72 of the outer tubular element 40.

When the compressed air supply to the chamber 26a is interrupted, the spring 34 biases the piston 30 back to its initial rest position illustrated in the drawing. This causes the withdrawal of the rod member 36 and hence of the attachment member 38, while the screw 74 is screwed freely back onto the threading 72.

During this phase, the play recovery device for taking up the play constituted by the screw 58, the nut 48 and the annular friction member 73 provides, in known manner, for the recovery of any supplementary braking travel due to the wear of the brake members. In brief, this is achieved in the following manner. In the case of wear of the brake shoes, during the phase of advance of the rod member 36 to effect the braking, relative axial movement occurs between the screw 58, the nut 48 and the outer tubular element 40 on the one hand and the sleeve 42 with the annular friction member 73 on the other, which are kept stationary relative to the housing 12. In this way, the spring 64 is compressed.

During the phase of return to the initial condition under the action of the spring 34, the attachment member 38 with the tubular shaft 46 stops in the starting position, while the piston 30 with the outer tubular element 40 continues its withdrawal stroke. This causes, therefore, the disengagement of the coupling surfaces 66 and 68 and this engagement is renewed as a result of the rotation of the screw 58 relative to the nut 48 under the action of the spring 64. Finally, the tubular shaft 46 with the attachment member 38 is positioned relative to the sleeve 42 in a new position which is advanced axially by a length corresponding to the magnitude of the wear of the brake members. This new axial position is maintained by the action of the annular friction member 73.

The emergency or parking braking, on the other hand, is achieved first by a service braking operation in the manner explained above, and subsequently by the connection of the tubular connector 22 to exhaust. Thus, the piston 32 is advanced under the action of the spring 84, causing the engagement of the coupling surfaces 82 and 88 and the corresponding locking of the outer tubular element 40, and hence of the rod member 36, in the advanced braking position. Under these conditions, the torque resulting from the axial load applied to the screw 58 and to the nut 48 through the conical coupling 82-88 is opposed by the gear 50, which is locked against rotation by the pin 52.

In order to stop the braking action, and hence to move the brake elements away from the wheel, one can proceed automatically, simply restoring the connection between the pressurised air supply and the cylinder 28 through the connector 22 so as to free the nut 74 for rotation and hence allow the withdrawal of the rod member 36, or manually. In the second case, it suffices to pull the pin 52 outwardly so as to disengage the gear 50 and free for rotation the tubular shaft 46 and hence the nut 48 which is then screwed back onto the screw 58.

## Claims

1. A brake actuator for railway vehicles and the like, comprising a housing (12) defining a cylinder in which a first piston (30) is slidable under the action of pressurised fluid and against the action of resilient return means (34), the first piston having an associated rod member (36) movable axially through one end of the housing to operate braking means so as to achieve service braking, the rod member incorporating a screw-and-nut device (58, 48) for the automatic recovery of play due to wear of the braking means, and the actuator also being provided with spring-operated means housed within the housing and comprising a second piston (32) operatively associated with the rod member (36) to effect its advance so as to achieve emergency or parking braking automatically under the action of a thrust spring (84) opposed by a releasable fluid pressure opposing the thrust of the first piston, characterised in that the rod member (36) includes an axial tubular element (40) fixed to the first piston (30) and containing the screw-and-nut device (58, 48) for the automatic recovery of play, and the spring-operated means include a screw-and-nut unit (72, 74) which is substantially concentric with the screw-and-nut device (58, 48) for the automatic recovery of play and in which the screw (72) is formed by external threading on the axial tubular element (40) and the nut (74) is associated with the second piston (32) so as to be free to rotate during the operation of the first piston (30) in the presence of fluid pressure acting on the second piston (32) and to be locked against rotation upon the release of the fluid pressure under the action of the thrust spring (84) to achieve the emergency or parking braking following service braking effected by the first piston (30).

2. An actuator according to Claim 1, characterised in that the second piston (32) has a hollow axial portion (76) housing the nut (74) of the screw-and-nut unit (72, 74) of the spring-operated means and, around the nut (74), the thrust spring (84); the hollow axial portion (76) and the nut (74) carrying respective complementary coupling members (82, 88) kept in the disengaged condition in the presence of the fluid pressure acting on the second piston (32) and arranged to engage each other as a result of the release of fluid pressure under the action of the thrust spring (84).

3. An actuator according to Claims 1 and 2, characterised in that the manual release means for achieving the withdrawal of the rod member (36) in the condition of activation of the spring-operated means include a gear (50) fixed for rotation to the front end of a tubular shaft (46) projecting from the housing (12) and containing the screw (58) and carrying the nut (48) of the screw-and-nut device (58, 48) for the automatic recovery of play, and a movable stop pin (52) which releasably engages the teeth of the gear (50) and, in use, is locked for rotation relative to the housing (12) of the actuator (10).

## Revendications

1. Actionneur de frein pour véhicules ferroviaires et équivalents, qui comprend un corps (12) définissant un cylindre dans lequel un premier piston (30) peut coulisser sous l'action d'un fluide sous pression et à l'encontre de l'action de moyens de rappel élastiques (34), le premier piston portant un organe formant tige (36) qui lui est associé et qui peut se déplacer axialement à travers une extrémité du corps pour actionner des moyens de freinage de manière à effectuer le freinage de service, l'organe formant tige comprenant un dispositif à vis et écrou (58, 48) pour le rattrapage automatique du jeu dû à l'usure des moyens de freinage, et l'actionneur étant en outre équipé de moyens actionnés par ressort qui sont logés dans le corps et qui comprennent un deuxième piston (32) associé fonctionnellement à l'organe formant tige (36) pour provoquer son avance de manière à effectuer automatiquement un freinage de secours ou de stationnement sous l'action d'un ressort de poussée (84) auquel résiste une pression de fluide relâchable, antagoniste à la poussée du premier piston, caractérisé en ce que l'organe formant tige (36) comprend un élément tubulaire axial (40) fixé au premier piston (30) et qui contient le dispositif à vis et écrou (58, 48) servant pour le rattrapage automatique du jeu, et les moyens actionnés par ressort comprennent une unité à vis et écrou (72, 74) qui est sensiblement concentrique au dispositif à vis et écrou (58, 48) servant pour le rattrapage automatique du jeu, et dans lequel la vis (72) est formée par un filetage extérieur de l'élément tubulaire axial (40) et l'écrou (74) est associé au deuxième piston (32) de manière à être libre de tourner pendant la manoeuvre du premier piston (30) en présence d'une pression de fluide qui agit sur le deuxième piston (32), et à être verrouillé à l'encontre de la rotation lorsque la pression de fluide est relâchée sous l'action dudit ressort de poussée (84) pour effectuer le freinage de secours ou de stationnement à la suite du freinage de service effectué par le premier piston (30).

2. Actionneur selon la revendication 1, caractérisé en ce que le deuxième piston (32) possède une partie axiale creuse (76) qui renferme l'écrou (74) de l'unité à vis et écrou (72, 74) des moyens actionnés par ressort, et le ressort de poussée (84) autour de l'écrou (74) ; la partie axiale creuse (76) et l'écrou (74) portant des moyens d'accouplement respectifs complémentaires (82, 88) qui sont maintenus dans l'état désaccouplé en présence d'une pression de fluide qui agit sur le deuxième piston (32), et qui sont agencés pour s'accoupler l'un à l'autre à la suite du relâchement de la pression de fluide sous l'action du ressort de poussée (84).

3. Actionneur selon les revendications 1 et 2, caractérisé en ce que les moyens de desserrage manuel prévus pour effectuer la rentrée de l'organe formant tige (36) dans l'état d'activation des moyens actionnés par ressort comprennent une roue dentée (50) fixée en rotation à l'extrémité avant d'un arbre tubulaire (46) qui émerge du corps (12) et qui renferme la vis (58) et porte l'écrou (48) du dispositif à vis et écrou (58, 48) servant pour le rattrapage automatique du jeu, et un ergot d'arrêt mobile (52) qui peut entrer en prise de façon démontable avec les dents de la roue dentée (50) et qui, en utilisation, est verrouillé en rotation par rapport au corps (12) de l'actionneur (10).

**Patentansprüche**

1. Bremsbetätigungsvorrichtung für Schienenfahrzeuge und dgl., mit einem Gehäuse (12), das einen Zylinder begrenzt, in dem ein erster Kolben (30) unter der Wirkung von Druckfluid und gegen die Wirkung von federnden Rückholmitteln (34) gleitend verschiebbar ist, wobei dem ersten Kolben eine Stange (36) zugeordnet ist, die in axialer Richtung durch einen Endbereich des Gehäuses bewegt werden kann, um Bremsmittel zu betätigen und dadurch eine Betriebsbremsung herbeizuführen, wobei die Stange eine Schrauben-Mutter-Anordnung (58, 48) für die automatische Beseitigung von durch Verschleiß der Bremsmittel verursachtem Spiel enthält und wobei die Bremsbetätigungsvorrichtung weiterhin in dem Gehäuse angeordnete, federbetätigte Mittel aufweist, die einen zweiten Kolben (32) umfassen, der mit der Stange (36) wirkungsmäßig verbunden ist, um diese zur Herbeiführung einer Not- oder Parkbremsung unter der Wirkung einer Druckfeder (84) automatisch vorzutreiben, wobei dieser Druckfeder (84) ein aufhebbarer Fluiddruck entgegenwirkt, der dem Druck des ersten Kolbens entgegengesetzt ist, **dadurch gekennzeichnet,** daß die Stange (36) ein an dem ersten Kolben (30) befestigtes rohrförmiges Element (40) umfaßt, das die Schrauben-Mutter-Anordnung (58, 48) für die automatische Spielbeseitigung enthält, daß die federbetätigtan Mittel eine zu dar Schrauben-Mutter-Anordnung (58, 48) im wesentlichen konzentrische Schrauben-Mutter-Einheit (72, 74) zur automatischen Spielbeseitigung umfassen, deren die Schraube (72) von einem Außengewinde auf dem axialen rohrförmigen Element (40) gebildet ist und deren Mutter (74) dem zweiten Kolben (32) zugeordnet ist, so daß sie während der Betätigung das ersten Kolbens (30) in Anwesenheit von auf den zweiten Kolben (32) einwirkendem Fluiddruck frei drehbar ist und bei Aufhebung des Fluiddrucks unter der Wirkung der Druckfeder (84) gegen Drehung blockiert ist, um im Anschluß an die durch den ersten Kolben (30) bewirkten Betriebsbremsung die Not- oder Parkbremsung herbeizuführen.

2. Betätigungsvorrichtung nach Anspruch 1, dadurch gekennzeichnet, daß der zweite Kolben (32) einen hohlen axialen Abschnitt (76) aufweist, in dem die Mutter (74) der Schrauben-Mutter-Einheit (72, 74) der federbetätigten Mittel und, um diese Mutter herum, (74) die Druckfeder (84) aufgenommen sind, daß der hohle axiale Abschnitt (76) und die Mutter (74) zueinander komplementäre Kupplungsteile (82, 88) tragen, die bei Anwesenheit von auf den zweiten Kolben (32) einwirkendem Fluiddruck in ausgekuppeltem Zustand gehalten werden und so angeordnet sind, daß sie durch die Aufhebung des Fluiddrucks unter der Wirkung der Druckfeder (84) miteinander in Eingriff kommen.

3. Betätigungsvorrichtung nach Anspruch 1 und 2, dadurch gekennzeichnet, daß die manuellen Auslösemittel für das Zurückziehen der Stange (36) bei Aktivierung der federbetätigten Mittel ein Zahnrad (50) umfassen, das mit dem vorderen Ende einer rohrförmigen Welle (46) drehfast verbunden ist, die aus dem Gehäuse (12) hervorsteht und die Schraube (58) enthält und die Mutter (48) der Schrauben-Mutter-Vorrichtung (58, 48) zur automatischen Spielbeseitigung sowie einen beweglichen Anschlagstift (52) trägt, der lösbar in die Zähne des Zahnrads (50) eingreift und im Betrieb gegen eine Drehung relativ zu dem Gehäuse (12) der Betätigungsvorrichtung (10) blockiert ist.